# EUROPÄISCHE PATENTSCHRIFT

(11) **EP 0 659 004 B1**
(45) Veröffentlichungstag und Bekanntmachung des Hinweises auf die Patenterteilung: **17.03.2004**
(21) Anmeldenummer: 94118962.3
(22) Anmeldetag: 01.12.1994
(51) Int. Cl.: H04M 1/725, H04M 1/247

(54) **Mobiltelefon mit Breifkastenfunktion**
Mobile telephone with mailbox function
Téléphone mobile avec fonction boîte aux lettres

(30) Priorität: 17.12.1993 DE 4343295
(43) Veröffentlichungstag der Anmeldung: 21.06.1995
(60) Teilanmeldung: 03021398.7
(73) Patentinhaber: SIEMENS AKTIENGESELLSCHAFT, 80333 München (DE)
(72) Erfinder: Christal, Philip, D-85646 Anzing (DE)

(56) Entgegenhaltungen:
- EP-A- 0 494 525
- DE-A- 4 233 066
- PATENT ABSTRACTS OF JAPAN vol. 013 no. 354 (E-802) ,8.August 1989 & JP-A-01 114220 (HITACHI LTD) 2.Mai 1989,
- TELCOM REPORT, Bd. 10,Nr. 2, 1987 MÜNCHEN, Seiten 99-101, WAGENLEHNER 'BEDIENUNG DES MODERNEN MOBILTELEFONS - EINFACH UND LOGISCH'
- TELCOM REPORT, Bd. 16,Nr. 6, - Dezember 1993 MÜNCHEN, Seiten 332-335, CHRISTAL 'GSM-HANDY MIT TOP-HANDLING'

## Beschreibung

Die Erfindung bezieht sich auf ein Mobiltelefon mit einem Tastenfeld mit Wähl- und Funktionstasten und einem Anzeigefeld sowie mit ggf. im Bedienteil integrierten Sende-/Empfangseinrichtungen (Handheld).

Im GSM (Group Special Mobile), dem neuen Mobilfunksystem, werden neue Nachrichtendienste eingeführt und einige von anderen Mobilfunksystemen übernommen. Diese Dienste (Serviceleistungen) beinhalten Sprach- und Textnachrichten und die Anruferidentifikation (Caller Line Identification - CLI). Wie es aus vielen anderen Bereichen des Fernsprechwesens erkennbar ist, werden viele Merkmalsoperationen vom Benutzer kaum verstanden werden. Daraus folgt geringe Benutzerakzeptanz und Gebrauch. Potentielle Mensch-Maschine-Interface-Probleme mit Nachrichtenservice beruhen auf dem Wissen, ob eine neue Nachricht wartet, deren Typ zu identifizieren ist und die zugänglich zu machen ist durch Hören oder Sehen.

Sprachnachrichtensysteme in Analognetzwerken waren dem Benutzer zugänglich durch routinemäßiges Befragen ihrer Sprachnachrichtenzentren oder durch Empfang eines Anrufes von ihrem Sprachnachrichtenzentrum (VMC - Voice Message Center) beim Anschalten.

Aus der JP 01 114 220 A ist eine menügesteuerte Benutzeroberfläche für Mobiltelefone bekannt, die von sogenannten Soft-Keys, also von einer Zuordnung von Tasten zu Anzeigefeldern auf der Anzeigeeinrichtung Gebrauch macht. Diese menügesteuerte Benutzeroberfläche ist jedoch statisch bzw. wird ausschließlich durch interne Zustände des Mobiltelefons bestimmt und bietet dem Benutzer folglich keine spezifische Unterstützung bei der Behandlung von ankommenden Rufen oder Nachrichten, wie z.B. Sprach- oder Textnachrichten.

Der Erfindung liegt die Aufgabe zugrunde, für ein Mobiltelefon der eingangs beschriebenen Art eine einfache Lösung für eine Nachrichtenanzeige zu schaffen.

Diese Aufgabe wird gemäß der Erfindung gelöst durch eine im Standby-Betrieb mit der Bezeichnung "Nachricht" ("Message") bezeichnete Taste (Softkey), die bei Empfang einer Nachricht über Kurznachrichtenservice (SMS - Short Message Service) oder Anrufidentifizierung blinkt und ggf. mit einem akustischen Signal gekoppelt ist und bei deren Drücken ein Nachrichtenmenue angezeigt wird, das Mitteilungen über eine Sprachnachricht, eine Textnachricht einschließlich der Anzahl von neuen oder alten Nachrichten enthält sowie die Anzahl von bekannten Anrufen, von unbekannten Anrufen und eine Möglichkeit bietet, Nachrichten zu versenden.

Vorteilhafte Ausgestaltungen und Weiterbildungen des Erfindungsgegenstandes sind in den Unteransprüchen angegeben.

Nachstehend wird die Erfindung anhand eines in der Zeichnung dargestellten Ausführungsbeispiels näher erläutert.

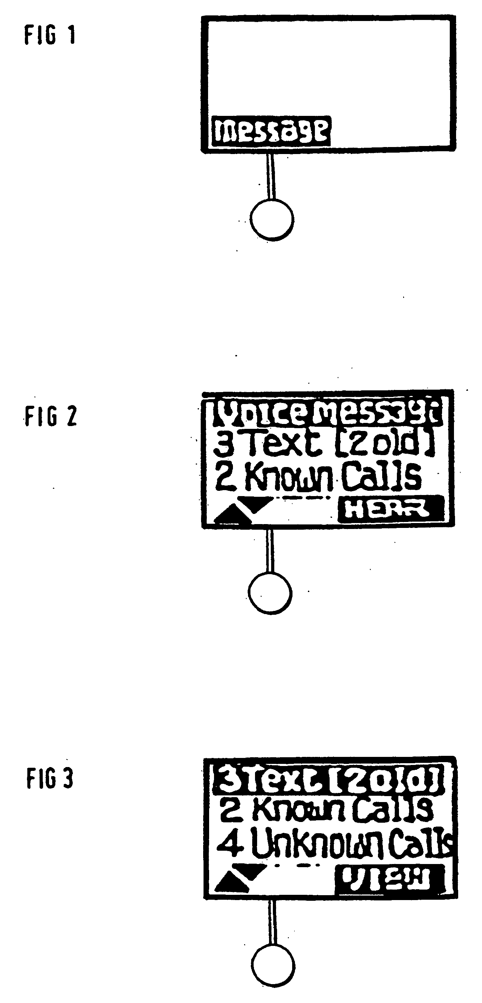

Als Display wird ein neues, für grafische Darstellungen besonders geeignetes Display verwendet, das aus einer Vielzahl von Verbindungsknoten (Pixels) aus sich kreuzenden waagerechten und senkrechten Leitungen besteht, die einzeln ansteuerbar sind. Im Standby-Betrieb ist ein zu einer Taste (Softkey) gehörendes Anzeigefeld im Display mit der Bezeichnung "Nachricht" ("Message") in der gewünschten Sprache bezeichnet (vgl. Figur 1). Beim Empfang einer Nachricht über den Kurznachrichtenservice (SMS - Short Message Service) oder einen nicht angenommenen Anruf mit Anrufidentifizierung (CLI) blinkt die Bezeichnung "Message", um somit die Aufmerksamkeit auf sich zu lenken. Das Blinken kann mit einem akustischen Signal gekoppelt sein. Die Anzeige "Message" blinkt unter folgenden Bedingungen: Empfang einer Sprachnachricht, einer Textnachricht (SMS) einschließlich der Anzahl von neuen oder alten Nachrichten sowie der Anzahl von bekannten Anrufen (CLI) und von unbekannten Anrufen. Durch Drücken des Softkey werden entsprechende Mitteilungen in einem Nachrichtenmenue angezeigt; es wird also der Nachrichtenstatus dargestellt. Anzeigen für Sprachemeldung, Kurznachrichten (SMS) und Anrufidentifizierung (CLI) blinken dabei, wenn neue, noch nicht gelesene Nachrichten empfangen worden sind. Wenn der Textnachrichtenspeicher voll ist, blinkt das Display ebenfalls. Ein Benutzer kann zur gewünschten Nachricht rollen und je nach Bedarf entweder eine Taste (Softkey) "Hören" oder "Sehen" drücken (vgl. Figuren 2 und 3). Durch Drücken der Taste "Hören" wird ein Ruf zum Sprachnachrichtenzentrum (VMC - Voice Message Center) initiiert; eine verbleibende Zugangskontrolle befindet sich dabei in Übereinstimmung mit dem Sprachnachrichtenzentrum durch Benutzung von Sprache oder codierten Schlüsselkommandos.

Beim ersten Zugriff auf ihr Sprachnachrichtenzentrum sind die Benutzer angehalten, eine "Set"-Taste zu drücken und die erforderliche Telefon-Nummer (Message Center Phone Number) einzugeben. Erneutes Drücken bewirkt danach eine Speicherung mit einem Identifizierer auf der SIM. Die "Message Center Phone Number" muß dem Benutzer von seinem Neztbetreiber (Operator) als Teil der Registrierung dieses Dienstes mitgeteilt worden sein. Es kann ebenso vorgesehen werden, daß die Nummer vom Operator oder Händler auf der SIM vorprogrammiert wird.

Die Tastenbezeichnungen (Softkey-Legenden) können verwendet werden zur Markierung des Endes einer Nachricht und zum Offerieren der vorhandenden Möglichkeiten von Anderungen (Edit) und Löschen (Delete). Ebenso kann die blinkende "Löschen"-Bezeichnung verwendet werden, um einen vollen Nachrichtenspeicher anzuzeigen.

## Patentansprüche

1. Mobiltelefon mit einem Tastenfeld mit Wähl- und Funktionstasten und einem Anzeigefeld sowie mit integrierten Sende-/Empfangseinrichtungen, **gekennzeichnet durch** eine im Standby-Betrieb mit der Bezeichnung "Nachricht" bezeichnete Taste, die bei Empfang einer Nachricht über Kurznachrichtenservice, SMS - short message service, oder Anrufidentifizierung, CLI, blinkt und mit einem akustischen Signal gekoppelt ist und bei deren Drücken ein Nachrichtenmenue angezeigt wird, das Mitteilungen Ober eine Sprachnachricht, eine Textnachricht, SMS, einschließlich der Anzahl von neuen oder alten Nachrichten enthält sowie die Anzahl von bekannten Anrufen, CLI, von unbekannten Anrufen und eine Möglichkeit Nachrichten zu versenden, bietet.

2. Mobiltelefon nach Anspruch 1, **dadurch gekennzeichnet, daß** Sprache, Kurznachrichten, SMS, und Anrufidentifizierung, CLI-Anzeigen blinken, wenn neue, noch nicht gelesene Nachrichten empfangen worden sind.

3. Mobiltelefon nach Anspruch 1 oder 2, **gekennzeichnet durch** ein Rollsystem derart, daß ein Benutzer zur gewünschten Nachricht rollt und je nach Bedarf entweder die Taste "Hören" oder "Sehen" drückt und daß **durch** Drücken der Taste "Hören" ein Ruf zum Sprachnachrichtenservice, VMS - voice message service, initiiert wird und eine verbleibende Zugangskontrolle sich in Übereinstimmung mit dem Sprachnachrichtenservice-Zentrum befindet **durch** Benutzung von Sprache oder codierten Schlüsselkommandos.

4. Mobiltelefon nach einem der Ansprüche 1 bis 3, **dadurch gekennzeichnet, daß** die Benutzer beim ersten Zugriff auf ihr Sprachnachrichtenzentrum angehalten sind, ein SET zu veranlassen und die erforderliche Telefon-Nummer einzugeben.

5. Mobiltelefon nach Anspruch 4, **dadurch gekennzeichnet, daß** Operator oder Händler die Nummer vorprogrammieren.

6. Mobiltelefon nach einem der Ansprüche 1 bis 5, **gekennzeichnet durch** die Verwendung von Tastenbezeichnungen zur Markierung des Endes einer Nachricht und zum Offerieren der vorhandenen Möglichkeiten von Andern und Löschen.

7. Mobiltelefon nach Anspruch 6, **gekennzeichnet durch** die Verwendung der blinkenden "Löschen"-Bezeichnung zur Anzeige eines vollen Nachrichtenspeichers.

## Claims

1. Mobile telephone with a keypad with selection and function keys and a display field and integrated transmitting/receiving devices, **characterized by** a key (softkey) with the designation "Message" in the standby mode that flashes when a message via the SMS (Short Message Service) or caller line identification is received and is coupled with an acoustic signal, and when it is pressed displays a message menu containing information concerning a voice message, a text message (SMS) including the number of new or old messages, the number of known calls (CLI) and of unknown calls and also offers the possibility of sending messages.

2. Mobile telephone according to Claim 1, **characterized in that** voice, text message (SMS) and caller line identification (CLI) indications flash if new messages that have not yet been read are received.

3. Mobile telephone according to Claims 1 or 2, **characterized by** a scroll system, in that the user scrolls to the required message and presses either the "Hear" or "View" key as required and that by pressing the "Hear" key a call to the voice message service (VMS) is initiated and a further access check takes place by agreement with the voice message service center using voice or coded key commands.

4. Mobile telephone according to one of Claims 1 to 3, **characterized in that** the users are prompted when they access the voice message center for the first time to initiate a SET and enter the required telephone number.

5. Mobile telephone according to Claim 4, **characterized in that** the number is pre-programmed by the operator or user.

6. Mobile telephone according to one of Claims 1 to 5, **characterized by** the use of key designations for marking the end of a message and for offering available options for editing or deleting.

7. Mobile telephone according to Claim 6, **characterized by** the use of the flashing "Delete" designation to indicate a full message memory.

## Revendications

1. Téléphone mobile avec un champ de touches comprenant des touches de sélection et des touches de fonction et avec un champ d'affichage ainsi que des dispositifs émetteurs/récepteurs intégrés, **caractérisé par** une touche désignée par l'indication «message» en mode standby, laquelle clignote à la réception d'un message par l'intermédiaire d'un service de messages courts, SMS - Short Message Service, ou d'une identification de ligne d'appel, CLI, et est couplée à un signal acoustique, telle que, si on pousse dessus, un menu messages apparaît, lequel contient des communications concernant un message vocal, un message texte, SMS, y compris le nombre de nouveaux ou d'anciens messages ainsi que le nombre d'appels connus, CLI, d'appels inconnus et offre une possibilité d'émettre des messages.

2. Téléphone mobile selon la revendication 1, **caractérisé en ce que** des indications de voix, de messages courts, SMS, et d'identification de ligne d'appel, CLI, clignotent lorsque de nouveaux messages non encore lus ont été reçus.

3. Téléphone mobile selon la revendication 1 ou 2, **caractérisé par** un système de déroulement tel qu'un utilisateur déroule pour aller jusqu'au message voulu et appuie sur la touche «écouter» ou «voir» selon les besoins, tel qu'une pression sur la touche «écouter» initialise un appel vers le centre de messagerie vocale, VMS - Voice Message Service, et tel qu'un contrôle d'accès restant est en conformité avec ledit centre de messagerie vocale par l'utilisation de la voix ou par des commandes clés codées.

4. Téléphone mobile selon l'une des revendications 1 à 3, **caractérisé en ce que**, lors du premier accès à leur centre de messagerie vocale, les utilisateurs sont invités à provoquer un SET et à introduire le numéro de téléphone requis.

5. Téléphone mobile selon la revendication 4, **caractérisé en ce que** le numéro est préprogrammé par l'opérateur ou par le commerçant.

6. Téléphone mobile selon l'une des revendications 1 à 5, **caractérisé par** l'utilisation de désignations de touches pour marquer la fin d'un message et pour offrir les possibilités existantes de modifier et d'effacer.

7. Téléphone mobile selon la revendication 6, **caractérisé par** l'utilisation de l'indication clignotante «effacer» pour indiquer que la mémoire des messages est pleine.
